# FASCICULE DE BREVET EUROPEEN

(11) **EP 3 633 826 B1**
(45) Date de publication et mention de la délivrance du brevet: **27.05.2026**
(21) Numéro de dépôt: 19199747.7
(22) Date de dépôt: 26.09.2019
(51) Int. Cl.: H02K 1/28, H02K 7/00, H02K 16/00, H02K 17/16

(54) **ROTOR À ARBRE NON TRAVERSANT, ASSEMBLAGE DE ROTORS, ROTOR À MASSES MAGNÉTIQUES MULTIPLES ET MACHINE ÉLECTRIQUE TOURNANTE ASSOCIÉE**
ROTOR MIT NICHT DURCHGEHENDER WELLE, ROTORENANORDNUNG, ROTOR MIT MEHREREN MAGNETISCHEN MASSEN UND ENTSPRECHENDE ELEKTRISCH UMLAUFENDE MASCHINE
ROTOR WITH NON-THROUGH SHAFT, ROTOR ASSEMBLY, ROTOR WITH MULTIPLE MAGNETIC MASSES AND ASSOCIATED ROTATING ELECTRICAL MACHINE

(30) Priorité: 03.10.2018 FR 1859169
(43) Date de publication de la demande: 08.04.2020
(73) Titulaire: GE Energy Power Conversion Technology Ltd, Rugby, Warwickshire CV21 1BD (GB)
(72) Inventeur: GALMICHE, Christophe, 54200 TOUL (FR); PRADURAT, Jean-François, 83170 BRIGNOLES (FR); ROCHE, Fabien, 54113 BLENOD LES TOUL (FR)
(74) Mandataire: Casalonga

(56) Documents cités:
- EP-A1- 3 048 703
- DE-A1- 102006 047 186
- GB-A- 1 150 876
- US-A1- 2004 189 126
- US-A1- 2009 218 898
- US-A1- 2014 097 721

## Description

La présente invention concerne les machines électriques tournantes et se rapporte plus particulièrement à un rotor de machine électrique comprenant un arbre non traversant.

La présente invention concerne également un assemblage de plusieurs rotors, un rotor à masses magnétiques multiples et une machine électrique tournante comprenant un tel assemblage de rotors ou un tel rotor.

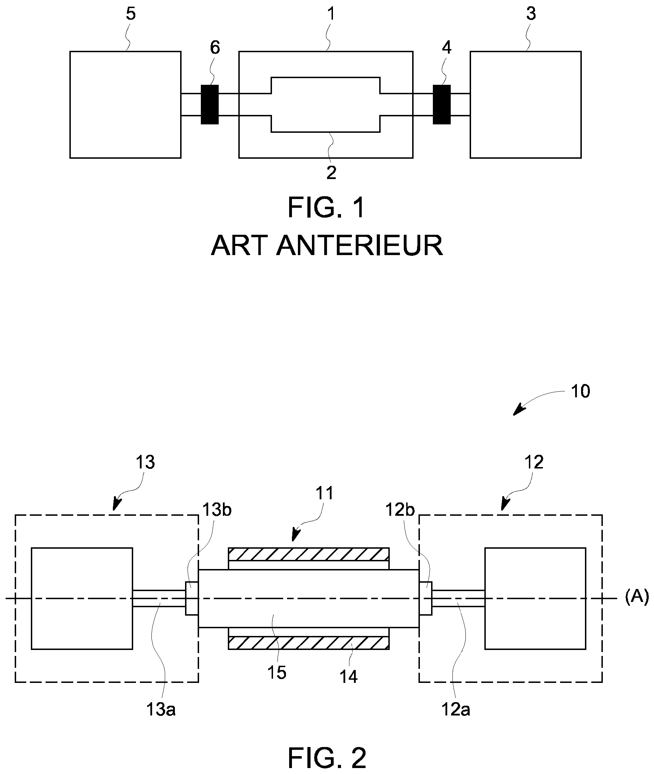

La figure 1 illustre un exemple d'installation industrielle selon l'art antérieur comprenant une machine électrique tournante 1 comprenant un rotor 2 avec un arbre traversant ou un rotor monobloc comprenant un arbre et un corps magnétique venus de même matière, relié d'une part à une turbine à gaz 3 par un dispositif d'accouplement 4 et, d'autre part, à un compresseur 5 par un dispositif d'accouplement 6.

Par exemple, la turbine à gaz produit et transmet au rotor 2 une puissance mécanique de 130 MW et la machine électrique 1 génère une puissance d'origine électrique de 45 MW.

Le compresseur 5 reçoit par l'intermédiaire du rotor 2 une puissance totale de 175 MW résultant de la somme des puissances mécanique et d'origine électrique.

Par conséquent, le dispositif d'accouplement 6 est dimensionné pour transmettre une puissance d'au moins 175 MW.

Selon les modes d'utilisation de l'installation industrielle, le couple transmis par l'intermédiaire des dispositifs d'accouplement 4 et 6 est par exemple supérieur à un million de N.m (Newton.mètre) à une basse vitesse de rotation inférieure à 200 tours par minute, ou le couple transmis est par exemple inférieur à 200000 N.m à une haute vitesse de rotation supérieure à 3000 tours par minute.

Le document EP0609645 décrit un rotor feuilleté comprenant un arbre non traversant pour un moteur électrique asynchrone.

Les extrémités du rotor sont cylindriques et sont chacune équipées d'un dispositif d'accouplement.

Le document US2014097721 concerne un rotor similaire.

Le document US9450470B2 décrit un rotor comprenant deux masses magnétiques ne comprenant pas d'ouverture reliées entre elles par un demi-arbre, chaque masse magnétique comprenant à une extrémité libre un demi-arbre non traversant cylindrique.

Les documents EP3048701 et EP3048703 divulguent un rotor avec un arbre non traversant comprenant deux demi-arbres.

L'extrémité de l'un des demi-arbres comprend un tourteau d'accouplement d'un seul tenant et l'extrémité libre de l'autre demi-arbre étant cylindrique supportant la masse du rotor via un palier situé à cette même extrémité.

Le demi-arbre cylindrique n'a pas de fonction d'accouplement.

Le tourteau d'accouplement est fixé à un autre tourteau d'accouplement d'un seul tenant disposé par exemple à l'extrémité de l'arbre du compresseur 5 pour transmettre le couple requis.

Il est donc également nécessaire de rapporter un dispositif d'accouplement à l'extrémité du deuxième arbre pour transmettre un couple à cette extrémité.

Généralement, un tourteau d'accouplement rapporté est monté à l'extrémité cylindrique du demi-arbre, par exemple un manchon d'accouplement comprenant un tourteau d'accouplement.

Le tourteau d'accouplement est monté sur l'arbre par exemple par frettage, par clavetage ou par frettage hydraulique du tourteau d'accouplement sur une extrémité conique de l'arbre.

L'accouplement du rotor nécessite d'abord de réaliser le manchon d'accouplement comprenant un tourteau d'accouplement puis de monter l'ensemble obtenu sur l'arbre.

Les opérations de production du tourteau et de montage sur l'arbre nécessitent des phases d'usinage spécifiques du tourteau et de l'arbre.

Ces opérations nécessitent des tolérances de fabrication fines coûteuses sur le tourteau d'accouplement rapporté et sur l'extrémité de l'arbre recevant le tourteau d'accouplement.

En outre, l'arbre doit être allongé pour accueillir une interface de frettage comprenant le tourteau.

Comme il s'agit d'une pièce rapportée, le couple transféré par le tourteau d'accouplement rapporté est limité pour empêcher qu'il ne se désolidarise de l'arbre et ne tourne sur lui-même.

Pour augmenter la valeur du couple transmissible par le tourteau d'accouplement rapporté, le tourteau d'accouplement comporte des cannelures coopérant avec des cannelures situées à l'extrémité de l'arbre.

Cependant, la réalisation de l'arbre cannelé et du tourteau d'accouplement associé entraîne des opérations d'usinage complexes supplémentaires longues et coûteuses.

On connaît du document US9190879 un rotor comprenant deux demi-arbres compactant des tôles magnétiques traversées par un arbre central relié aux demi-arbres, l'arbre maintenant les tôles magnétiques compactées.

L'extrémité libre de chaque demi-arbre comprend un tourteau d'accouplement d'un seul tenant.

Cependant, comme les tôles magnétiques comprennent un évidement central, et pour des vitesses de rotation périphérique élevées, par exemple de 300 m/s, des contraintes mécaniques se concentrent autour de l'évidement et sont susceptibles d'endommager les tôles magnétiques.

On connaît également de l'état de la technique un rotor monobloc comprenant deux extrémités d'arbre, une masse magnétique et des tourteaux d'accouplement reliés aux extrémités d'arbre venus de même matière.

Cependant un tel rotor n'est pas démontable, la masse magnétique et l'arbre étant massifs et monoblocs.

Par conséquent, les rotors de grandes tailles sont difficilement transportables.

De plus, si un élément du rotor, par exemple une extrémité de l'arbre casse, il n'est pas possible de réparer le rotor.

Il est donc proposé de pallier les inconvénients des rotors comprenant un arbre non traversant selon l'état de la technique, notamment en augmentant la valeur du couple transmissible à travers le rotor tout en limitant le nombre d'éléments du rotor pour limiter la complexité de réalisation du rotor, l'encombrement du rotor et en facilitant son démontage.

Au vu de ce qui précède l'invention propose un rotor à arbre non traversant pour machine électrique selon la revendication 1.

Chaque demi-arbre est réalisé d'un seul tenant et comprend un tourteau d'accouplement situé à l'opposé de la bride de fixation.

Selon une caractéristique, la bride de fixation et le tourteau d'accouplement d'un demi-arbre sont reliés par un arbre médian.

Avantageusement, les arbres médians ont des longueurs différentes.

De préférence, le diamètre extérieur d'au moins un tourteau d'accouplement est inférieur ou égal au diamètre extérieur de la masse magnétique.

De préférence, les demi-arbres sont identiques.

Selon l'invention, le tourteau d'accouplement comprend des trous débouchants répartis sur au moins un diamètre pour accueillir des moyens de fixation de manière à transmettre un couple.

Selon une autre caractéristique, les trous débouchants sont répartis en quinconce sur au moins deux diamètres différents du tourteau.

Les trous débouchants sont alternativement lisses et taraudés.

Avantageusement, la masse magnétique comprend des tôles magnétiques compactées.

De préférence, la masse magnétique comprend un empilement de plaques métalliques.

Selon une autre caractéristique, le rotor à arbre non traversant comprend en outre des tirants répartis uniformément sur au moins un diamètre de la masse magnétique de manière à maintenir la masse magnétique compactée entre les demi-arbres, le diamètre d'au moins un arbre médian étant supérieur au diamètre d'implantation des tirants, le diamètre extérieur de la bride de fixation dudit demi-arbre étant égal au diamètre de l'arbre médian, une extrémité de chaque tirant étant en prise dans un taraudage de l'arbre médian comprenant autant de taraudages que de tirants.

De préférence, la masse magnétique comprend un corps métallique monobloc.

Avantageusement, la masse magnétique comprend un évidement central.

De préférence, la masse magnétique comprend des barres conductrices et deux couronnes de court-circuit de manière à former une cage d'écureuil, les couronnes de court-circuit n'étant pas compactées entre les brides de fixation et la masse magnétique.

Selon un autre aspect, il est proposé un assemblage de rotors en série comprenant au moins deux rotors à arbre non traversant tels que définis précédemment, dans lequel un tourteau d'accouplement d'un rotor est fixé à un tourteau d'accouplement de l'autre rotor pour transmettre un couple entre les deux rotors.

De préférence, les tourteaux d'accouplement des rotors sont fixés entre eux par l'intermédiaire d'un arbre intermédiaire comprenant deux tourteaux d'accouplement.

Avantageusement, l'arbre intermédiaire est soutenu par un palier.

Selon encore un autre aspect, il est proposé un rotor à masses magnétiques multiples, comprenant un rotor à arbre non traversant tel que défini précédemment, et au moins une masse magnétique cylindrique dont une première extrémité est reliée à la bride de fixation d'un troisième demi-arbre d'un seul tenant et la deuxième extrémité est reliée à un tourteau d'accouplement du rotor pour transmettre un couple entre les masses magnétiques.

Selon encore un autre aspect, il est proposé une machine électrique tournante comprenant un rotor à arbre non traversant, un assemblage de rotors en série ou un rotor à masses magnétiques multiples tel que défini précédemment.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1, dont il a déjà été fait mention, illustre une installation industrielle comprenant une machine électrique tournante selon l'état de la technique ;
- la figure 2 illustre un premier mode de réalisation d'une installation industrielle ;
- la figure 3 illustre un premier mode de réalisation d'un rotor à arbre non traversant ;
- la figure 4 illustre un deuxième mode de réalisation d'un rotor à arbre non traversant ;
- les figures 5 et 6 illustrent un troisième mode de réalisation du tourteau d'accouplement ;
- la figure 7 illustre un quatrième mode de réalisation du tourteau d'accouplement ;
- la figure 8 illustre un troisième mode de réalisation du rotor à arbre non traversant ;
- la figure 9 illustre un quatrième mode de réalisation du rotor à arbre non traversant ;
- la figure 10 illustre un cinquième mode de réalisation du rotor à arbre non traversant ;
- la figure 11 illustre un sixième mode de réalisation du rotor à arbre non traversant ;
- la figure 12 illustre un septième mode de réalisation du rotor à arbre non traversant ;
- la figure 13 illustre un premier mode de réalisation d'un assemblage de rotors en série ;
- la figure 14 illustre un deuxième mode de réalisation d'un assemblage de rotors en série ; et
- la figure 15 illustre un exemple de mode de réalisation d'un rotor à masses magnétiques multiples.

On se réfère à la figure 2 qui illustre un premier mode de réalisation d'une installation industrielle 10 comprenant une machine électrique tournante 11 dont une première extrémité du rotor 15 est reliée à un premier système mécanique 12 et une deuxième extrémité du rotor est reliée à un deuxième système mécanique 13.

La machine électrique tournante 11 comprend en outre un stator 14 dans lequel est inséré un rotor 15 comprenant un arbre non traversant d'un axe central (A).

La machine électrique tournante 11 peut être une machine du type asynchrone à rotor bobiné, asynchrone à cage d'écureuil ou synchrone dont l'alimentation du rotor se fait de préférence par l'intermédiaire de bagues et balais.

Les premier et deuxième systèmes mécaniques 12 et 13 comprennent chacun un arbre 12a et 13a comprenant chacun un tourteau d'accouplement 12b et 13b.

Les tourteaux d'accouplement 12b et 13b sont reliés à des extrémités respectives du rotor 15 pour transmettre un couple mécanique entre le rotor 15 et les systèmes mécaniques 12 et 13.

Le premier système mécanique 12 est par exemple une turbine à gaz et le deuxième système mécanique 13 est par exemple un compresseur consommant le couple fourni par la turbine à gaz.

Si la machine électrique tournante 11 fonctionne en mode moteur, le deuxième système mécanique 13 reçoit sur son arbre 13a un couple égal à la somme des couples générés par la machine 11 et le premier système mécanique 12, le rotor 15 étant dimensionné pour transmettre les couples générés par la machine et la turbine à gaz, par exemple un couple jusqu'à un million de N.m.

Si la machine électrique tournante 11 fonctionne en mode générateur, le couple généré par le premier système mécanique 12 est transmis au deuxième système mécanique 13 par l'intermédiaire du rotor 15.

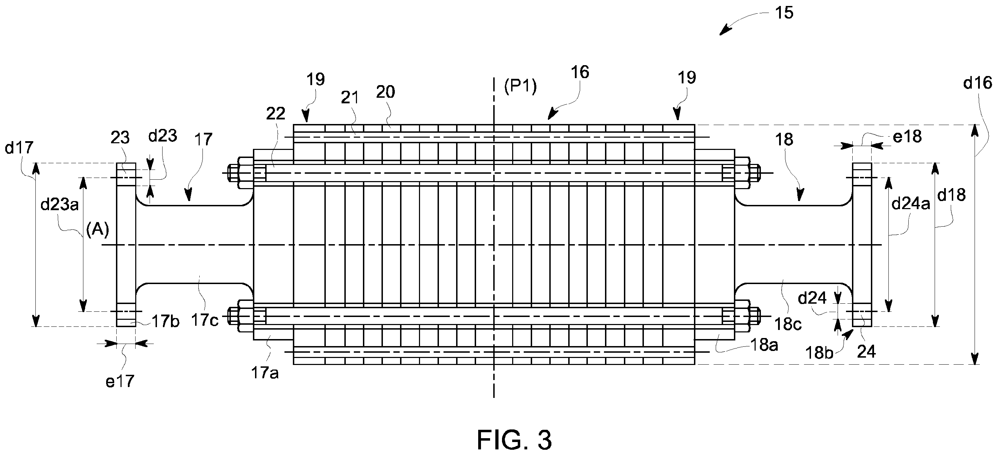

On se référera à la figure 3 qui illustre une vue en coupe axiale d'un premier mode de réalisation du rotor 15 à arbre non traversant pour machine électrique tournante asynchrone à cage d'écureuil.

Le rotor 15 à arbre non traversant comprend une masse magnétique cylindrique 16 enserrée par deux demi-arbres 17 et 18.

La masse magnétique 16 a un diamètre extérieur d16.

Les demi-arbres 17 et 18 comprennent chacun une bride de fixation 17a et 18a reliée à une extrémité de la masse magnétique 16, et un tourteau d'accouplement 17b et 18b situé à l'opposé de la bride de fixation 17a et 18a et relié au système mécanique 12 ou 13 correspondant.

Chaque demi-arbre 17 et 18 est réalisé d'un seul tenant. Le tourteau d'accouplement 17b et 18b n'est pas rapporté sur le demi-arbre 17 et 18.

Par conséquent, chaque tourteau d'accouplement peut transmettre par continuité de matière un couple de valeur plus élevée que dans le cas d'un demi-arbre comprenant un tourteau d'accouplement rapporté et solidarisé au demi-arbre par exemple par frettage ou clavetage.

Les demi-arbres 17 et 18 sont obtenus par exemple par forgeage ou moulage et sont par exemple réalisés en acier.

Chaque demi-arbre 17 et 18 comprend en outre un arbre médian 17c et 18c entre la bride de fixation 17a ou 18a et le tourteau d'accouplement 17b ou 18b.

Chaque arbre médian 17c et 18c peut être soutenu en rotation par un palier (non représenté) ou sans palier si chaque arbre 12a et 13a est supporté par un palier.

Les tourteaux d'accouplement 17b et 18b sont cylindriques et comprennent respectivement un diamètre extérieur d17 et d18.

Le diamètre extérieur d17 et d18 d'au moins un tourteau d'accouplement 17 et 18 est inférieur ou égal au diamètre extérieur d16 de la masse magnétique 16 de sorte que le rotor 15 peut être inséré dans le stator 14 de la machine électrique 11 sans démontage du stator ou sans insertion du rotor 15 dans un stator comprenant plusieurs parties assemblées et démontables.

Les demi-arbres 17 et 18 sont identiques.

Par conséquent, le rotor 15 est symétrique par rapport à un plan (P1) perpendiculaire à l'axe de rotation (A) et passant par un plan de symétrie de la masse magnétique 16.

Les modes propres du rotor 15 ne sont pas dédoublés, le rotor 15 comportant moins de modes propres que dans le cas de demi-arbres différents permettant d'augmenter la plage des vitesses de rotation utilisables dans détériorer le rotor 15.

De plus, la machine électrique tournante 11 peut être déplacée angulairement d'un angle de 180° par exemple pour optimiser le passage de câbles reliant le stator à un dispositif d'alimentation. Comme le rotor 15 est symétrique, les deux tourteaux 17b et 18b sont au même endroit permettant un accouplement aux systèmes mécaniques 12 et 13 lorsque la machine 11 a été déplacée angulairement de 180°.

Par ailleurs, la masse magnétique 16 comprend deux disques de court-circuit 19 enserrant des tôles magnétiques compactées 20 et des barres conductrices 21 logées dans les tôles magnétiques 20 et les disques de court-circuit 19 de sorte les disques de court-circuit 19 et les barres conductrices 21 forment une cage d'écureuil.

Des tirants 22 sont répartis uniformément sur un diamètre de la masse magnétique 16 de manière à maintenir les tôles magnétiques 20 compactées entre les demi-arbres 17 et 18.

Les tirants 22 passent à travers des trous lisses disposés dans les demi-arbres 17 et 18, et comprennent à chaque extrémité un écrou de manière à maintenir les tôles magnétiques 20 compactées.

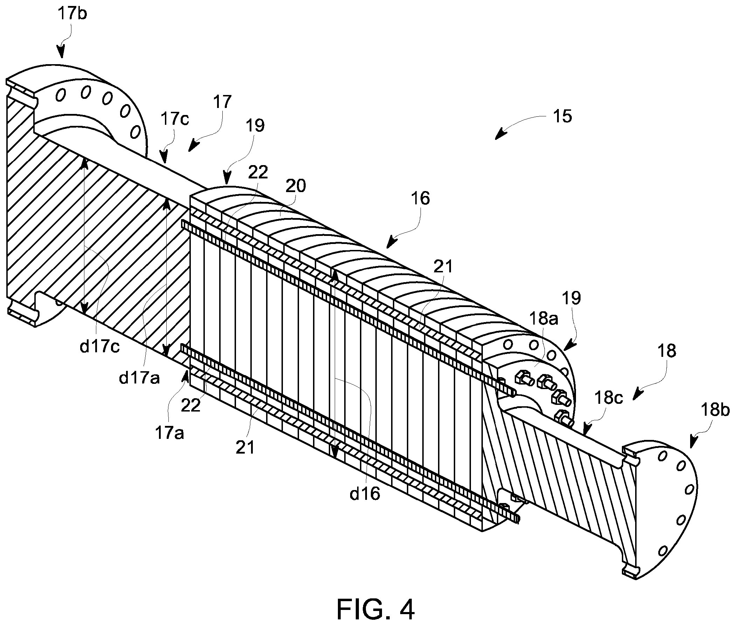

Selon un deuxième mode de réalisation du rotor 15 représenté à la figure 4, le diamètre d17c de l'arbre médian 17c est choisi de sorte qu'il soit supérieur au diamètre d'implantation des tirants 22 de sorte qu'une extrémité de chaque tirant 22 soit en prise dans un taraudage de l'arbre médian 17c, l'arbre médian 17c comprenant autant de taraudages répartis sur un diamètre de l'arbre médian que de tirants 22. Le diamètre extérieur d17a de la bride de fixation 17a est égal au diamètre d17c de l'arbre médian 17c.

En variante, la masse magnétique 16 comprend des plaques métalliques compactées remplaçant les tôles magnétiques compactées.

L'épaisseur des tôles magnétiques 20 est de préférence inférieure à 2 mm, préférentiellement 0.65 mm, par exemple 0.5 mm.

L'épaisseur des plaques métalliques est de préférence supérieure à 5% du diamètre extérieur d16 de la masse magnétique 16.

Selon une autre variante, les plaques métalliques sont reliées entre elles par des vis noyées dans les plaques, et les plaques métalliques situées aux extrémités sont reliées aux demi-arbres 17 et 18 par des vis noyées dans les plaques d'extrémité.

Chaque tourteau d'accouplement 17b et 18b comprend des trous débouchants 23 et 24 répartis sur un diamètre pour accueillir des moyens de fixation de manière à transmettre un couple.

De préférence, les trous débouchants 23 et 24 sont répartis uniformément sur le diamètre et/ou chaque tourteau d'accouplement 17b et 18b comprend un nombre pair de trous débouchants 23 et 24.

Chaque tourteau d'accouplement 17b et 18b comprend de préférence entre 6 et 48 trous débouchants.

Le centre des trous débouchants 23, 24 sont répartis uniformément sur un même diamètre d23a, d24a inférieur ou égal à 0.9 fois le diamètre extérieur d17, d18 du tourteau d'accouplement 17, 18.

Les trous débouchants 23 et 24 ont de préférence un diamètre d23 et d24 inférieur ou égal à 0.1 fois le diamètre extérieur d17 et d18 du tourteau d'accouplement 17 et 18 correspondant.

Les tourteaux d'accouplement 17 et 18 ont de préférence une épaisseur e17 et e18 inférieure ou égale à 0.2 fois le diamètre extérieur d17 et d18 du tourteau d'accouplement 17 et 18 correspondant.

Les moyens de fixation comprennent des boulons ou des tiges filetées comprenant à chacune de leurs extrémités un écrou de sorte que les tourteaux d'accouplement des demi-arbres 17 et 18 soient solidarisés aux tourteaux d'accouplement des systèmes mécaniques 12 et 13 de transmission de couple.

Selon un deuxième mode de réalisation des trous débouchants 23 et 24, ceux-ci comprennent des trous taraudés et les trous débouchants des tourteaux des systèmes mécaniques sont lisses. Des vis passant par les trous lisses coopèrent avec les taraudages de manière à transmettre un couple entre le rotor 15 et les systèmes mécaniques 12 et 13.

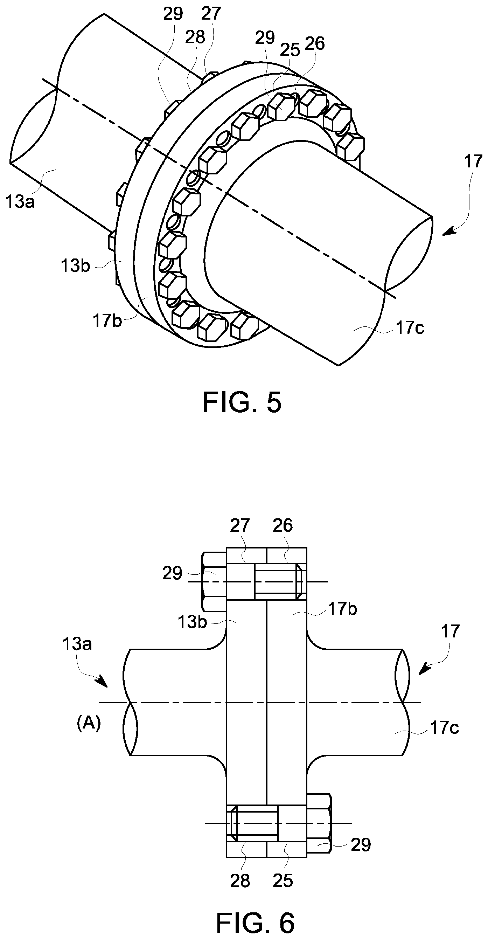

Selon un troisième mode de réalisation des trous débouchants 23 représenté aux figures 5 et 6, le tourteau d'accouplement 17b comprend des trous débouchants 23 alternativement lisses 25 et taraudés 26, et le tourteau d'accouplement 13b du deuxième système mécanique 13 comprend des trous débouchants alternativement lisses 27 et taraudés 28 disposés de sorte qu'un trou lisse 25 du tourteau 17b soit coaxial à un trou taraudé 28 du tourteau 13b, et qu'un trou taraudé 26 du tourteau 17b soit coaxial à un trou lisse 27 du tourteau 13b.

Des vis 29 passent chacune par un trou lisse 27, 25 d'un tourteau 13b, 17b et chaque vis est en prise dans un trou taraudé 26, 28 d'un tourteau 17b, 13b.

Bien entendu, le tourteau d'accouplement 18b peut comprendre des trous débouchants 24 selon le troisième mode de réalisation coopérant avec le tourteau d'accouplement 12b du premier système mécanique 12.

La figure 5 illustre une vue partielle du demi-arbre 17 comprenant le tourteau d'accouplement 17b et l'arbre médian 17c, l'arbre 13a comprenant le tourteau d'accouplement 13b et les vis 29, et la figure 6 illustre une coupe partielle selon une direction axiale de la figure 5.

Les têtes des vis 29 sont disposées alternativement du coté de l'arbre médian 17c et de l'arbre 13a permettant de réduire la distance angulaire séparant deux trous débouchants adjacents de manière à augmenter le nombre de vis 29 pour augmenter le couple maximal transmis à travers les tourteaux d'accouplement 13b et 17b.

Selon d'autres modes de réalisation, les deux tourteaux d'accouplement peuvent comporter des trous débouchants de différents types ou de même type, les deux tourteaux d'accouplement 17b et 18b étant conçus de manière à coopérer avec les tourteaux d'accouplement 13b et 12b des systèmes mécaniques 13 et 12, ou inversement si le rotor 15 est symétrique et déplacé angulairement d'un angle de 180°.

Par exemple le tourteau d'accouplement 17b peut comporter des trous lisses et le tourteau d'accouplement 18b peut comporter des trous taraudés ou des trous lisses et taraudés, tel que décrit précédemment.

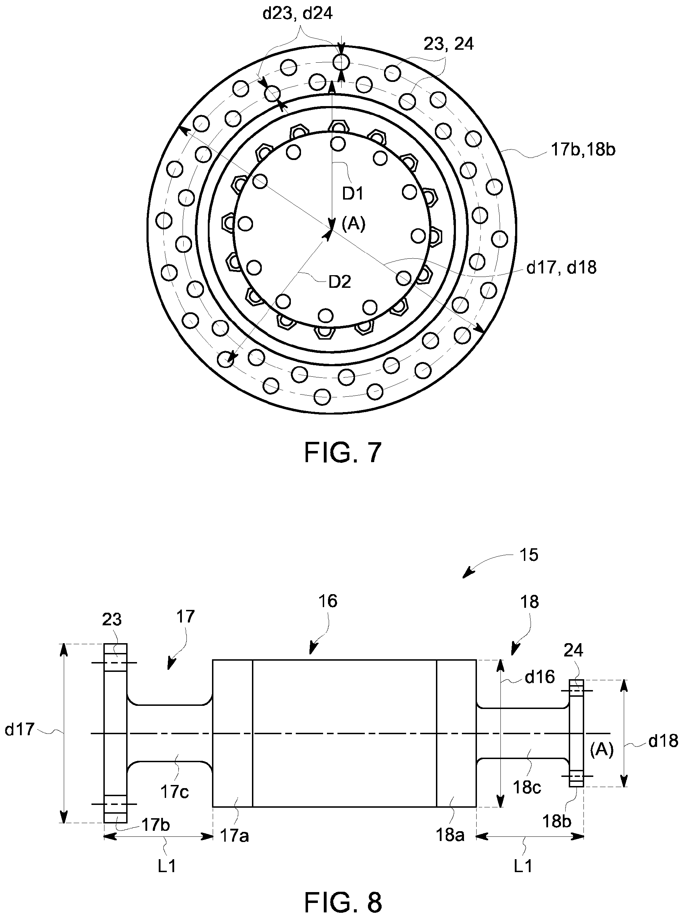

Selon un quatrième mode de réalisation du tourteau d'accouplement 17b, 18b illustré à la figure 7, les centres des trous débouchants 23, 24 du tourteau d'accouplement 17b, 18b sont répartis uniformément en quinconce sur deux diamètres D1 et D2 différents du tourteau d'accouplement17b, 18b, le diamètre D2 étant supérieur au diamètre D1, les trous débouchants 23, 24 étant disposés de préférence en nombre pair sur chacun des diamètres D1 et D2.

De préférence, le diamètre D2 est inférieur ou égal à 0.9 fois le diamètre extérieur d17, d18 du tourteau d'accouplement 17b, 18b, et le diamètre D1 de la deuxième rangée de trous débouchants 23, 24 est de préférence inférieur ou égal à 0.8 fois le diamètre extérieur d17, d18 du tourteau d'accouplement 17b, 18b.

Le diamètre de chaque trou débouchant d23, d24 est de préférence inférieur ou égal à 0.1 fois le diamètre extérieur d17, d18 du tourteau d'accouplement 17b, 18b.

Bien entendu, les trous débouchants 23, 24 peuvent être répartis sur au moins trois diamètres différents du tourteau d'accouplement 17b, 18b, pour transmettre plus de couple.

Les modes de réalisation des trous débouchants des tourteaux d'accouplement 17b et 18b décrits précédemment peuvent bien entendu être combinés.

La figure 8 illustre une vue d'un troisième mode de réalisation du rotor 15 à arbre non traversant.

On retrouve la masse magnétique 16 enserrée par les demi-arbres 17 et 18.

Ce mode de réalisation diffère du premier mode de réalisation du rotor 15 en ce que le diamètre extérieur d18 du tourteau d'accouplement 18b est inférieur au diamètre extérieur d17 du tourteau d'accouplement 17b, le diamètre extérieur d17 du tourteau d'accouplement 17b étant supérieur au diamètre extérieur d16 de la masse magnétique 16.

Le diamètre extérieur d18 du tourteau d'accouplement 18b est inférieur au diamètre extérieur d16 de la masse magnétique 16 de manière à insérer le rotor 15 dans le stator 14 sans démontage du stator.

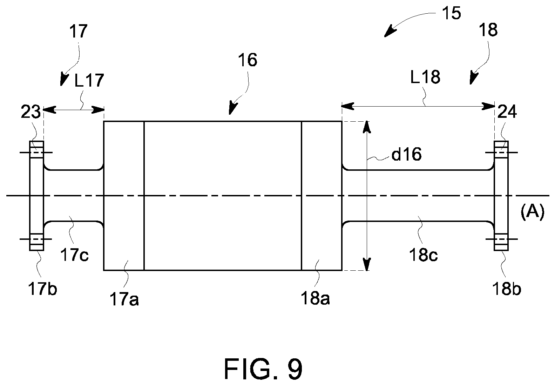

La figure 9 illustre une vue d'un quatrième mode de réalisation du rotor 15 à arbre non traversant.

On retrouve la masse magnétique 16 enserrée par les demi-arbres 17 et 18.

Ce mode de réalisation diffère du premier mode de réalisation du rotor 15 en ce que les arbres médians 17c et 18c reliant respectivement les brides de fixation 17a et 18a et les tourteaux d'accouplement 17b et 18b sont de longueur L17 et L18 différentes.

Bien entendu, les deuxième et troisième modes de réalisation du rotor 15 peuvent être combinés.

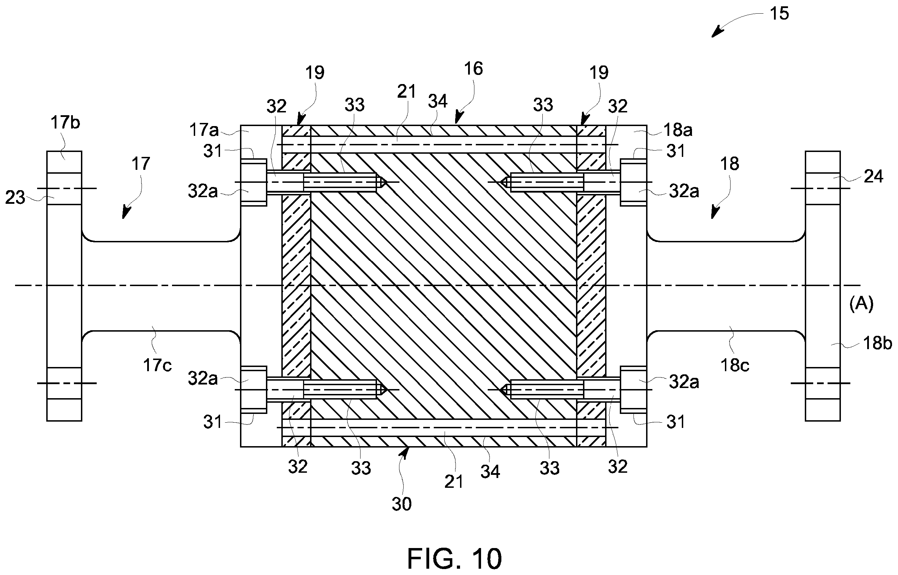

La figure 10 illustre une coupe partielle selon une direction axiale d'un cinquième mode de réalisation du rotor 15.

Ce mode de réalisation différent du premier mode de réalisation illustré à la figure 3 en ce que la masse magnétique 16 comprend un corps métallique monobloc 30 et les brides de fixation 17a et 18a comprennent en outre des lamages 31.

Le rotor 15 comporte en outre des vis 32 réparties uniformément sur un diamètre de chaque demi-arbre 17 et 18.

Chaque vis 32 est en prise dans un taraudage 33 du corps métallique monobloc 30 de manière à maintenir compactés les disques de court-circuit 19 et le corps métallique 30 entre les demi-arbres 17 et 18.

Chaque tête de vis 32a est logée dans un lamage 31 du demi-arbre 17 et 18.

En variante non représentée, les brides de fixation 17a et 18a ne comprennent pas de lamage.

Le corps métallique monobloc 30 comprend en outre des logements 34 accueillant les barres conductrices 21 réparties uniformément sur un diamètre du corps métallique monobloc 30 formant avec les disques de court-circuit 19 une cage d'écureuil.

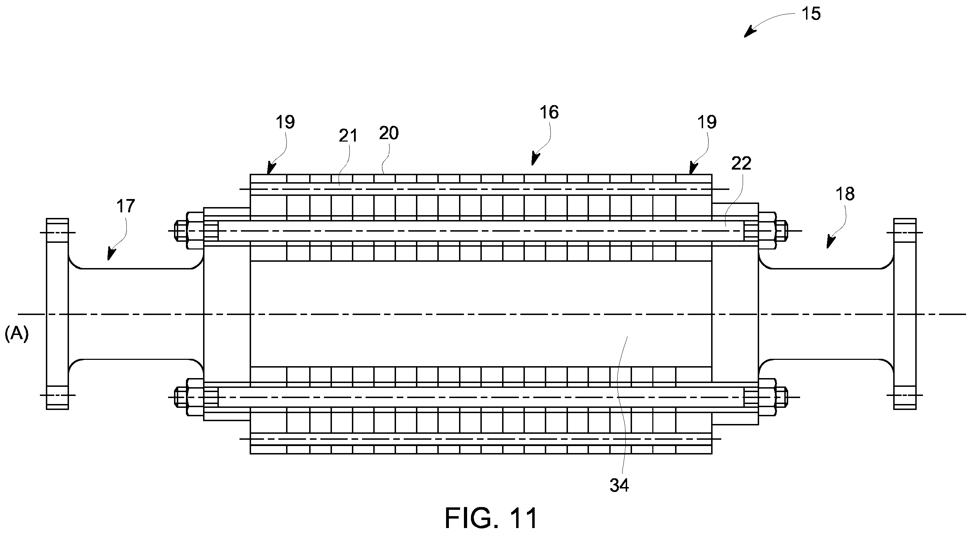

Selon un sixième mode de réalisation du rotor 15 illustré à la figure 11 illustrant une coupe selon une direction axiale du rotor 15, les tôles magnétiques 20 et les disques de court-circuit 19 comprennent un évidement central de sorte que la masse magnétique 16 comprend un évidement central 34.

Ce mode de réalisation de la masse magnétique 16 est permis lorsque la vitesse périphérique du rotor 15 est inférieure à 180 m/s de sorte que la concentration des contraintes mécaniques générées lors de la rotation du rotor 15 sur le pourtour de l'évidement central 34 de chacune des tôles magnétiques 20 ne soit pas susceptible de détériorer la masse magnétique 16.

L'évidement central 34 de la masse magnétique 16 permet d'alléger la masse de rotor de manière à augmenter la vitesse critique du rotor 15.

L'évidement central ne comporte pas d'arbre traversant ou de tirant central assurant la compaction de la masse magnétique 16.

Les disques de court-circuit 19 sont de préférence en cuivre ou en cuivre allié.

Les disques de court-circuit 19 ont généralement une limite élastique plus faible que celle des tôles magnétiques 20.

Pour éviter que les disques de court-circuit 19 franchissent leur limite élastique, en variante non représentée, les disques de court-circuit 19 ne comprennent par d'évidement central.

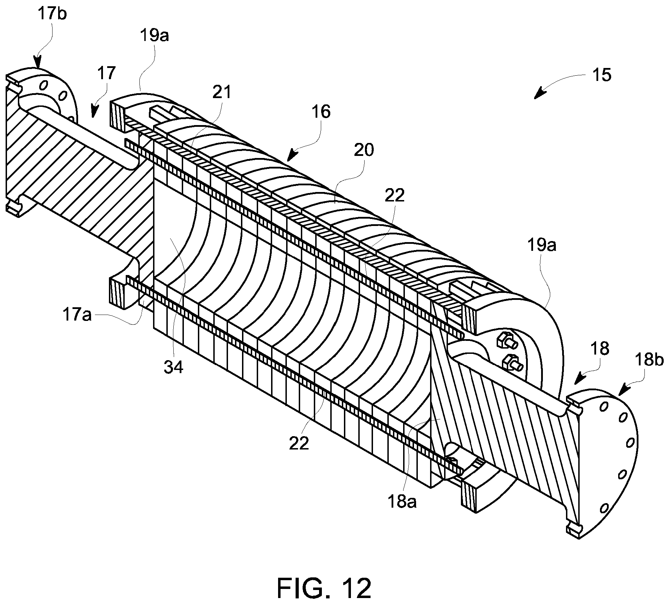

Un septième mode de réalisation du rotor 15 est illustré à la figure 12 et diffère du sixième mode de réalisation illustré à la figure 11 en ce que la masse magnétique 16 ne comporte pas de disque de court-circuit 19.

Le rotor 15 comporte des couronnes de court-circuit 19a qui ne sont pas compactées entre les brides de fixation 17a et 18a et la masse magnétique 16.

Les couronnes de court-circuit référencés 19a et les barres conductrices 21 forment une cage d'écureuil.

En variante non représentée, la masse magnétique 16 ne comprend pas d'évidement central.

Bien que les modes de réalisation du rotor 15 à arbre non traversant décrits précédemment sont des rotors asynchrones à cage d'écureuil, l'invention s'applique aussi à un rotor à arbre non traversant asynchrone bobiné. Dans ce cas les barres conductrices sont remplacées par des encoches logeant des bobines raccordées entre elles.

L'invention s'applique également à un rotor à arbre non traversant synchrone bobiné alimenté de préférence par un dispositif de bagues et balais. Les barres conductrices peuvent alors être remplacées par des encoches logeant des bobines reliées par exemple aux bagues.

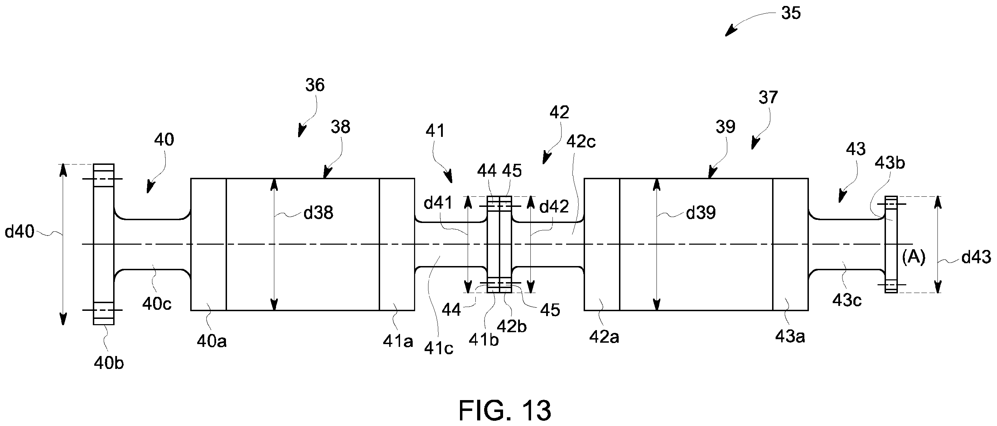

On se réfère à la figure 13 qui illustre un premier mode de réalisation d'un assemblage de rotors en série 35 comprenant deux rotors 36 et 37 comprenant un arbre non traversant similaire au rotor 15.

Les premier et deuxième rotors 36 et 37 comprennent chacun une masse magnétique 38 et 39 enserrée entre deux demi-arbres 40, 41 et 42, 43, chaque demi-arbre étant d'un seul tenant et similaire aux demi-arbres décrits précédemment.

Les masses magnétiques 38 et 39 sont identiques, par exemple du type monobloc et de mêmes dimensions.

Le premier demi-arbre 40 du premier rotor 36 comprend une bride de fixation 40a reliée à la masse magnétique 38 et un tourteau d'accouplement 40b relié par un arbre médian 40c à la bride de fixation, le diamètre extérieur d40 du tourteau d'accouplement 40b étant supérieur au diamètre extérieur d38 et d39 des masses magnétiques 38 et 39 des premier et deuxième rotors 36 et 37.

Le deuxième demi-arbre 41 du premier rotor 36 comprend une bride de fixation 41a reliée à la masse magnétique 38 et un tourteau d'accouplement 41b relié par un arbre médian 41c à la bride de fixation, le diamètre extérieur d41 du tourteau d'accouplement 41b étant inférieur au diamètre extérieur d38 et d39 des masses magnétiques 38 et 39 des premier et deuxième rotors 36 et 37.

Le premier demi-arbre 42 du premier rotor 37 comprend une bride de fixation 42a reliée à la masse magnétique 39 et un tourteau d'accouplement 42b relié par un arbre médian 42c à la bride de fixation, le diamètre extérieur d42 du tourteau d'accouplement 42b étant inférieur au diamètre extérieur d38 et d39 des masses magnétiques 38 et 39 des premier et deuxième rotors 36 et 37.

Les tourteaux d'accouplement 41b et 42b du deuxième demi-arbre 41 du premier rotor 36 et du premier demi-arbre 42 du deuxième rotor 37 sont dimensionnés pour être solidarisés, par exemple par des boulons passant dans les trous débouchants coaxiaux 44 et 45 des tourteaux d'accouplement 41b et 42b pour transmettre un couple entre les deux rotors 36 et 37.

Le deuxième demi-arbre 43 du premier rotor 37 comprend une bride de fixation 43a reliée à la masse magnétique 39 et un tourteau d'accouplement 43b relié par un arbre médian 43c à la bride de fixation, le diamètre extérieur d43 du tourteau d'accouplement 43b étant inférieur au diamètre extérieur d38 et d39 des masses magnétiques 38 et 39 des premier et deuxième rotors 36 et 37.

Les diamètres extérieurs des tourteaux d'accouplement d40, d41, d42, et d43 sont choisis de sorte que l'assemblage de rotors en série 35 puisse être inséré dans un stator 14 comprenant deux sous-stators coopérant chacun avec un rotor 36 et 37 sans démontage du stator 14 et de manière que chaque rotor 36 et 37 génère un couple électromagnétique.

Par exemple, les diamètres référencés d41, d42 et d43 sont inférieurs aux diamètres référencés d38 et d39, et le diamètre référencé d40 est supérieur aux diamètres référencés d38 et d39.

En variante non représentée, les diamètres référencés d40, d41 et d42 sont inférieurs aux diamètres référencés d38 et d39, et le diamètre référencé d43 est supérieur aux diamètres référencés d38 et d39. La direction d'insertion de l'assemblage de rotors en série 35 dans le stator est inversée par rapport à l'exemple précédent.

Selon encore une autre variante non représentée, les diamètres référencés d40, d41, d42 et d43 sont inférieurs aux diamètres référencés d38 et d39 permettant une insertion de l'assemblage de rotors en série 35 dans le stator selon les deux directions.

Selon d'autres modes de réalisation, les masses magnétiques 36 et 37 peuvent être de dimensions et/ou de types différents comprenant par exemple des tôles magnétiques 20 ou un empilement de plaques métalliques.

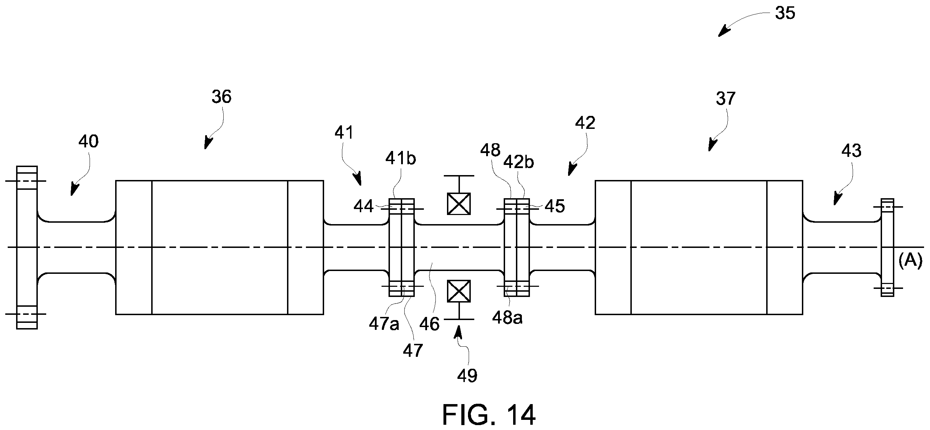

Selon un deuxième mode de réalisation, l'assemblage de rotors en série 35 peut comprendre en outre un arbre intermédiaire 46 disposé entre les tourteaux d'accouplement 41b et 42b du deuxième demi-arbre 41 du premier rotor 36 et du premier demi-arbre 42 du deuxième rotor 37 de manière à transmettre un couple entre les deux rotors 36 et 37 comme illustré à la figure 14.

L'arbre intermédiaire 46 comprend à chacune de ses extrémités un tourteau d'accouplement 47 et 48 coopérant avec les tourteaux d'accouplement 41b et 42b des rotors 36 et 37.

Les tourteaux d'accouplement 47 et 48 de l'arbre intermédiaire 46 comprennent chacun des trous débouchants 47a et 48a coopérant avec les trous débouchants 44 et 45 des tourteaux d'accouplement 41b et 42b pour accueillir par exemple des boulons.

L'arbre intermédiaire 46 permet d'éloigner les rotors 36 et 37 l'un de l'autre de manière à créer un espace simplifiant la maintenance de la machine électrique tournante 11.

Selon la géométrie et/ou le matériau de l'arbre intermédiaire 46, il est possible d'ajuster la vitesse critique de l'assemblage de rotors en série 35 de manière à modifier la fréquence des modes propres en torsion et en flexion de l'assemblage 35.

De plus, comme la vitesse critique peut être modifiée en ajustant les caractéristiques géométriques ou le matériau de l'arbre intermédiaire 46, il suffit de produire deux rotors 36 et 37 identiques et de les relier avec un arbre intermédiaire dimensionné pour ajuster la vitesse critique de l'assemblage 35 à la vitesse critique souhaitée.

Il est également aisé de modifier la vitesse critique de l'assemblage 35 durant la durée de vie de la machine 11 en modifiant les caractéristiques de l'arbre intermédiaire 46.

L'arbre intermédiaire peut être soutenu en rotation par un palier 49.

Le soutien de l'arbre intermédiaire 46 par le palier 49 permet d'augmenter la vitesse critique en flexion de l'assemblage 35 de rotors en série.

L'assemblage 35 de rotors en série peut comprendre plus de deux rotors en série, certains rotors adjacents étant reliés par un arbre intermédiaire soutenu ou non par un palier, le stator comprenant autant de sous-stators que de rotors et coopérant chacun avec un rotor de manière à générer un couple électromagnétique.

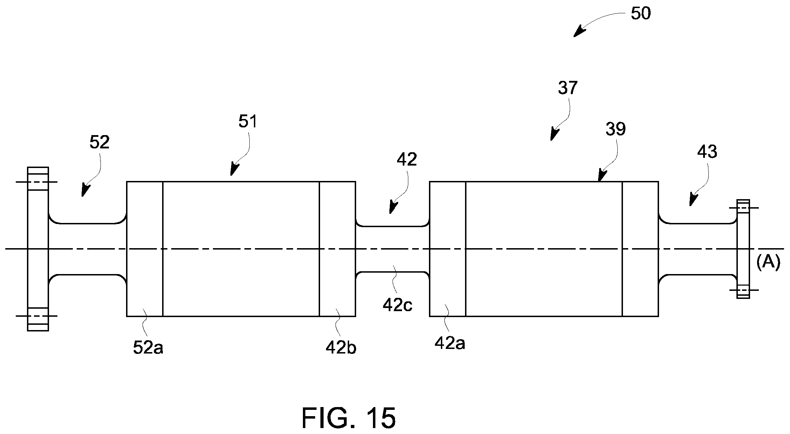

On se réfère à la figure 15 qui illustre un exemple de mode de réalisation d'un rotor à masses magnétiques multiples 50.

Le rotor à masses magnétiques multiples 50 comprend un rotor 37 tel que décrit précédemment et une deuxième masse magnétique cylindrique 51 dont les extrémités sont reliées d'une part au tourteau d'accouplement 42b du premier demi-arbre 42 du rotor 37 et, d'autre part, à la bride de fixation 52a d'un troisième demi-arbre 52 similaire aux demi-arbres 42 et 43.

Les masses magnétiques 39 et 51 sont identiques, mais elles peuvent être de type différent et/ou de dimensions différentes.

Le diamètre extérieur des masses magnétiques 39 et 51, et le diamètre extérieur des demi-arbres 42, 43 et 52 sont dimensionnés de sorte que le rotor 50 puisse être inséré dans le stator 14 qui comprend autant de sous-stators que de masses magnétiques de manière à générer un couple électromagnétique.

En variante non représentée, le rotor à masses magnétiques multiples 50 comprend un palier de soutien pour soutenir l'arbre médian 42c en rotation.

Le palier de soutien permet d'augmenter la vitesse critique en flexion du rotor à masses magnétiques multiples 50.

Par exemple, le rotor à masses magnétiques multiples peut comprendre plus de deux masses magnétiques, les masses magnétiques étant séparées par des demi-arbres soutenus ou non par des paliers.

La machine électrique tournante comprenant l'assemblage en série de rotors ou le rotor à masses magnétiques multiples permet de développer une puissance électrique supérieure à celle d'une machine comprenant un seul rotor en respectant les valeurs de dimensionnement maximales des machines électriques tournantes, par exemple en ne dépassant pas une vitesse périphérique du rotor de 300 m/s et en maîtrisant les caractéristiques dimensionnelles de la machine électrique tournante de sorte qu'elle soit par exemple transportable et facilement démontable pour une maintenance plus aisée.

Bien entendu, la machine électrique tournante comprenant le rotor 15, l'assemblage en série de rotors 35 ou le rotor à masses magnétiques multiples 50 peut fonctionner en mode moteur ou générateur.

Selon d'autres modes de réalisation non représentés, le diamètre extérieur des tourteaux d'accouplement d'un élément comprenant le rotor 15, l'assemblage en série de rotors 35 ou le rotor à masses magnétiques multiples 50 est supérieur au diamètre de leur masse magnétique. Dans ces modes de réalisation, le stator logeant un de ces éléments comprend plusieurs parties assemblées autour de l'élément de sorte que l'élément soit disposé dans le stator sans être démonté, le stator et l'élément formant une machine électrique tournante.

Le rotor 15, l'assemblage en série de rotors 35 et le rotor à masses magnétiques multiples 50 permettent de transférer un couple jusqu'à un million de N.m.

## Revendications

1. Rotor (15, 36, 37) à arbre non traversant pour machine électrique, relié à un tourteau d'accouplement (13b) d'un système mécanique (13), le rotor comprenant une masse magnétique cylindrique (16, 38, 39) enserrée entre deux demi-arbres (17, 18, 40, 41, 42, 43) comprenant chacun une bride de fixation (17a, 18a, 40a, 41a, 42a, 43a) reliée à la masse magnétique, chaque demi-arbre est réalisé d'un seul tenant et comprend un tourteau d'accouplement (17b, 18b, 40b, 41b, 42b, 43b) situé à l'opposé de la bride de fixation, le tourteau d'accouplement (17b, 18b, 40b, 41b, 42b, 43b) de chaque demi-arbre comprenant des trous débouchants (23, 24, 44, 45) répartis sur au moins un diamètre pour accueillir des moyens de fixation de manière à transmettre un couple, **caractérisé en ce que** les trous débouchants du tourteau (17b) d'au moins un demi-arbre (17) sont alternativement lisses (25) et taraudés (26), et le tourteau d'accouplement (13b) du système mécanique (13) comporte des trous débouchants alternativement lisses (27) et taraudés (28) disposés de sorte qu'un trou lisse (25) du tourteau (17b) du au moins un demi-arbre (17) soit coaxial à un trou taraudé (28) du tourteau (13b) du système mécanique (13) et qu'un trou taraudé (26) du tourteau (17b) du au moins un demi-arbre (17) soit coaxial à un trou lisse (27) du tourteau (13b) du système mécanique (13), des vis (29) passant chacune par un trou lisse (27, 25) d'un tourteau (13b, 17b) et chaque vis étant en prise dans un trou taraudé (26, 28) d'un tourteau (17b, 13b).

2. Rotor à arbre non traversant pour machine électrique, relié à un tourteau d'accouplement (13b) d'un système mécanique (13), selon la revendication 1, dans lequel la bride de fixation (17a, 18a, 40a, 41a, 42a, 43a) et le tourteau d'accouplement (17b, 18b, 40b, 41b, 42b, 43b) d'un demi-arbre sont reliés par un arbre médian (17c, 18c, 40c, 41c, 42c, 43c).

3. Rotor à arbre non traversant pour machine électrique, relié à un tourteau d'accouplement (13b) d'un système mécanique (13), selon la revendication 2, dans lequel les arbres médians (17c, 18c, 40c, 41c, 42c, 43c) ont des longueurs différentes.

4. Rotor à arbre non traversant pour machine électrique, relié à un tourteau d'accouplement (13b) d'un système mécanique (13), selon l'une quelconque des revendications 1 à 3, dans lequel les tourteaux d'accouplement (17b, 18b, 40b, 41b, 42b, 43b) des demi-arbres ont un diamètre (d17, d18, d40, d41, d42, d43) différent.

5. Rotor à arbre non traversant pour machine électrique, relié à un tourteau d'accouplement (13b) d'un système mécanique (13), selon l'une quelconque des revendications 1 à 4, dans lequel le diamètre extérieur (d17, d18, d40, d41, d42, d43) du tourteau d'accouplement (17b, 18b, 40b, 41b, 42b, 43b) d'au moins un demi-arbre est inférieur ou égal au diamètre extérieur (d16, d38, d39) de la masse magnétique (16, 38, 39).

6. Rotor à arbre non traversant pour machine électrique, relié à un tourteau d'accouplement (13b) d'un système mécanique (13), selon l'une des revendications 1 et 2, dans lequel les demi-arbres (17, 18, 40, 41, 42, 43) sont identiques.

7. Rotor à arbre non traversant pour machine électrique, relié à un tourteau d'accouplement (13b) d'un système mécanique (13), selon la revendication 1, dans lequel les trous débouchants (23, 24, 44, 45) du tourteau d'un demi-arbres sont répartis en quinconce sur au moins deux diamètres différents (D1, D2) du tourteau (17b, 18b, 40b, 41b, 42b, 43b).

8. Rotor à arbre non traversant pour machine électrique, relié à un tourteau d'accouplement (13b) d'un système mécanique (13), selon l'une quelconque des revendications 1 à 7, dans lequel la masse magnétique (16) comprend des tôles magnétiques (20) compactées.

9. Rotor à arbre non traversant pour machine électrique, relié à un tourteau d'accouplement (13b) d'un système mécanique (13), selon l'une quelconque des revendications 1 à 7, dans lequel la masse magnétique (16) comprend un empilement de plaques métalliques.

10. Rotor à arbre non traversant pour machine électrique, relié à un tourteau d'accouplement (13b) d'un système mécanique (13), selon l'une des revendications 8 et 9, comprenant en outre des tirants (22) répartis uniformément sur au moins un diamètre de la masse magnétique (16, 38, 39) de manière à maintenir la masse magnétique compactée entre les demi-arbres (17,18), le diamètre (d17c) d'au moins un arbre médian (17c) étant supérieur au diamètre d'implantation des tirants, le diamètre extérieur (d17a) de la bride de fixation (17a) dudit demi-arbre (17) étant égal au diamètre (d17c) de l'arbre médian, une extrémité de chaque tirant étant en prise dans un taraudage de l'arbre médian comprenant autant de taraudages que de tirants.

11. Rotor à arbre non traversant pour machine électrique, relié à un tourteau d'accouplement (13b) d'un système mécanique (13), selon l'une quelconque des revendications 1 à 7, dans lequel la masse magnétique comprend un corps métallique monobloc (30).

12. Rotor à arbre non traversant pour machine électrique, relié à un tourteau d'accouplement (13b) d'un système mécanique (13), selon l'une quelconque des revendications 1 à 11, dans lequel la masse magnétique (16, 38, 39) comprend un évidement central (34).

13. Rotor à arbre non traversant pour machine électrique, relié à un tourteau d'accouplement (13b) d'un système mécanique (13), selon l'une quelconque des revendications 1 à 12, dans lequel la masse magnétique (16) comprend des barres conductrices (21) et deux couronnes de court-circuit (19a) de manière à former une cage d'écureuil, les couronnes de court-circuit (19a) n'étant pas compactées entre les brides de fixation (17a, 18a) et la masse magnétique (16).

14. Assemblage de rotors en série (35) comprenant au moins deux rotors (36, 37) à arbre non traversant, chaque rotor étant relié à un tourteau d'accouplement d'un système mécanique et défini selon l'une quelconque des revendications 1 à 13, dans lequel un tourteau d'accouplement (41b) d'un rotor (36) est fixé à un tourteau d'accouplement (42b) de l'autre rotor (37) pour transmettre un couple entre les deux rotors.

15. Assemblage de rotors en série, chaque rotor étant relié à un tourteau d'accouplement d'un système mécanique , selon la revendication 14, dans lequel les tourteaux d'accouplement (41b, 42b) des rotors (36, 37) sont fixés entre eux par l'intermédiaire d'un arbre intermédiaire (46) comprenant deux tourteaux d'accouplement (47, 48).

16. Assemblage de rotors en série, chaque rotor étant relié à un tourteau d'accouplement d'un système mécanique , selon la revendication 15, dans lequel l'arbre intermédiaire (46) est soutenu par un palier (49).

17. Rotor à masses magnétiques multiples (50), comprenant un rotor (37) relié à un tourteau d'accouplement d'un système mécanique et défini selon l'une quelconque des revendications 1 à 13, et au moins une masse magnétique cylindrique (51) dont une première extrémité est reliée à la bride de fixation (52a) d'un troisième demi-arbre (52) d'un seul tenant et la deuxième extrémité est reliée à un tourteau d'accouplement (42b) du rotor (37) pour transmettre un couple entre les masses magnétiques.

18. Machine électrique tournante comprenant un rotor (15) selon l'une quelconque des revendications 1 à 13, relié à un tourteau d'accouplement d'un système mécanique ou un assemblage de rotors en série (35) selon l'une quelconque des revendications 14 à 16, chaque rotor étant relié à un tourteau d'accouplement d'un système mécanique ou un rotor à masses magnétiques multiples (50) selon la revendication 17, relié à un tourteau d'accouplement d'un système mécanique.

## Patentansprüche

1. Rotor (15, 36, 37) mit nicht durchgehender Welle für eine elektrische Maschine, der mit einem Kupplungsflasch (13b) eines mechanischen Systems (13) verbunden ist, wobei der Rotor eine zylindrische Magnetmasse (16, 38, 39) umfasst, die zwischen zwei Halbwellen (17, 18, 40, 41, 42, 43) eingespannt ist, die jeweils eine Befestigungsklemme (17a, 18a, 40a, 41a, 42a, 43a) umfassen, die mit der Magnetmasse verbunden ist, wobei jede Halbwelle einteilig hergestellt ist und einen Kupplungsflansch (17b, 18b, 40b, 41b, 42b, 43b) umfasst, der sich gegenüber der Befestigungsklemme befindet, wobei die Wellenkupplung (17b, 18b, 40b, 41b, 42b, 43b) jeder Halbwelle Durchgangslöcher (23, 24, 44, 45) umfasst, die auf mindestens einen Durchmesser verteilt sind, um Befestigungsmittel aufzunehmen, so dass ein Drehmoment übertragen wird, **dadurch gekennzeichnet, dass** die Durchgangslöcher des Flansches (17b) von mindestens einer Halbwelle (17) abwechselnd glatt (25) und mit Gewinde (26) versehen sind, und der Kupplungsflansch (13b) des mechanischen Systems (13) abwechselnd glatte (27) und mit Gewinde (28) versehene Durchgangslöcher enthält, die so angeordnet sind, dass ein glattes Loch (25) des Flansches (17b) der mindestens einen Halbwelle (17) koaxial zu einem Gewindeloch (28) des Flansches (13b) des mechanischen Systems (13) ist und dass ein Gewindeloch (26) des Flansches (17b) der mindestens einen Halbwelle (17) koaxial zu einem glatten Loch (27) des Flansches (13b) des mechanischen Systems (13) ist, wobei die Schrauben (29) jeweils durch ein glattes Loch (27, 25) eines Flansches (13b, 17b) verlaufen und jede Schraube in ein Gewindeloch (26, 28) eines Flansches (17b, 13b) eingreift.

2. Rotor mit nicht durchgehender Welle für eine elektrische Maschine, der mit einem Kupplungsflansch (13b) eines mechanischen Systems (13) verbunden ist, nach Anspruch 1, wobei die Befestigungsklemme (17a, 18a, 40a, 41a, 42a, 43a) und der Kupplungsflansch (17b, 18b, 40b, 41b, 42b, 43b) einer Halbwelle durch eine Mittelwelle (17c, 18c, 40c, 41c, 42c, 43c) verbunden sind.

3. Rotor mit nicht durchgehender Welle für eine elektrische Maschine, der mit einem Kupplungsflansch (13b) eines mechanischen Systems (13) verbunden ist, nach Anspruch 2, wobei die Mittelwellen (17c, 18c, 40c, 41c, 42c, 43c) unterschiedliche Längen aufweisen.

4. Rotor mit nicht durchgehender Welle für eine elektrische Maschine, der mit einem Kupplungsflansch (13b) eines mechanischen Systems (13) verbunden ist, nach einem der Ansprüche 1 bis 3, wobei die Kupplungsflansche (17b, 18b, 40b, 41b, 42b, 43b) der Halbwellen einen unterschiedlichen Durchmesser (d17, d18, d40, d41, d42, d43) aufweisen.

5. Rotor mit nicht durchgehender Welle für eine elektrische Maschine, der mit einem Kupplungsflansch (13b) eines mechanischen Systems (13) verbunden ist, nach einem der Ansprüche 1 bis 4, wobei der Außendurchmesser (d17, d18, d40, d41, d42, d43) des Kupplungsflansches (17b, 18b, 40b, 41b, 42b, 43b) mindestens einer Halbwelle kleiner oder gleich dem Außendurchmesser (d16, d38, d39) der Magnetmasse (16, 38, 39) ist.

6. Rotor mit nicht durchgehender Welle für eine elektrische Maschine, der mit einem Kupplungsflansch (13b) eines mechanischen Systems (13) verbunden ist, nach einem der Ansprüche 1 und 2, wobei die Halbwellen (17, 18, 40, 41, 42, 43) identisch sind.

7. Rotor mit nicht durchgehender Welle für eine elektrische Maschine, der mit einem Kupplungsflansch (13b) eines mechanischen Systems (13) verbunden ist, nach Anspruch 1, wobei die Durchgangslöcher (23, 24, 44, 45) des Flansches einer Halbwelle versetzt auf mindestens zwei unterschiedliche Durchmesser (D1, D2) des Flansches (17b, 18b, 40b, 41b, 42b, 43b) verteilt sind.

8. Rotor mit nicht durchgehender Welle für eine elektrische Maschine, der mit einem Kupplungsflansch (13b) eines mechanischen Systems (13) verbunden ist, nach einem der Ansprüche 1 bis 7, wobei die Magnetmasse (16) verdichtete magnetische Bleche (20) umfasst.

9. Rotor mit nicht durchgehender Welle für eine elektrische Maschine, der mit einem Kupplungsflansch (13b) eines mechanischen Systems (13) verbunden ist, nach einem der Ansprüche 1 bis 7, wobei die Magnetmasse (16) einen Stapel aus Metallplatten umfasst.

10. Rotor mit nicht durchgehender Welle für eine elektrische Maschine, der mit einem Kupplungsflansch (13b) eines mechanischen Systems (13) verbunden ist, nach einem der Ansprüche 8 und 9, ferner umfassend Zugstangen (22), die gleichmäßig über mindestens einen Durchmesser der Magnetmasse (16, 38, 39) verteilt sind, so dass die Magnetmasse verdichtet zwischen den Halbwellen (17, 18) gehalten wird, wobei der Durchmesser (d17c) mindestens einer Mittelwelle (17c) größer ist als der Einbaudurchmesser der Zugstangen, wobei der Außendurchmesser (d17a) der Befestigungsklemme (17a) der Halbwelle (17) gleich dem Durchmesser (d17c) der Mittelwelle ist, wobei ein Ende jeder Zugstange in eine Gewindebohrung der Mittelwelle eingreift, die so viele Gewindebohrungen wie Zugstangen umfasst.

11. Rotor mit nicht durchgehender Welle für eine elektrische Maschine, der mit einem Kupplungsflansch (13b) eines mechanischen Systems (13) verbunden ist, nach einem der Ansprüche 1 bis 7, wobei die Magnetmasse einen einteiligen Metallkörper (30) umfasst.

12. Rotor mit nicht durchgehender Welle für eine elektrische Maschine, der mit einem Kupplungsflansch (13b) eines mechanischen Systems (13) verbunden ist, nach einem der Ansprüche 1 bis 11, wobei die Magnetmasse (16, 38, 39) eine zentrale Aussparung (34) umfasst.

13. Rotor mit nicht durchgehender Welle für eine elektrische Maschine, der mit einem Kupplungsflansch (13b) eines mechanischen Systems (13) verbunden ist, nach einem der Ansprüche 1 bis 12, wobei die Magnetmasse (16) Leiterstäbe (21) und zwei Kurzschlussringe (19a) umfasst, um einen Käfigläufer zu bilden, wobei die Kurzschlussringe (19a) nicht zwischen den Befestigungsklemmen (17a, 18a) und der Magnetmasse (16) verdichtet sind.

14. Serielle Rotorbaugruppe (35), die mindestens zwei Rotoren (36, 37) mit nicht durchgehender Welle umfasst, wobei jeder Rotor mit einem Kupplungsflansch eines mechanischen Systems verbunden ist und nach einem der Ansprüche 1 bis 13 definiert ist, wobei ein Kupplungsflansch (41b) eines Rotors (36) an einem Kupplungsflansch (42b) des anderen Rotors (37) befestigt ist, um ein Drehmoment zwischen den beiden Rotoren zu übertragen.

15. Serielle Rotorbaugruppe, wobei jeder Rotor mit einem Kupplungsflansch eines mechanischen Systems verbunden ist, nach Anspruch 14, wobei der Kupplungsflansch (41b, 42b) der Rotoren (36, 37) über eine Zwischenwelle (46), die zwei Kupplungsflansche (47, 48) umfasst, aneinander befestigt sind.

16. Serielle Rotorbaugruppe, wobei jeder Rotor mit einem Kupplungsflansch eines mechanischen Systems verbunden ist, nach Anspruch 15, wobei die Zwischenwelle (46) von einem Lager (49) gestützt wird.

17. Rotor mit mehreren Magnetmassen (50), umfassend einen Rotor (37), der mit einem Kupplungsflansch eines mechanischen Systems verbunden ist und nach einem der Ansprüche 1 bis 13 definiert ist, und mindestens eine zylindrische Magnetmasse (51), deren erstes Ende mit der Befestigungsklemme (52a) einer dritten einstückigen Halbwelle (52) verbunden ist und deren zweites Ende mit einem Kupplungsflansch (42b) des Rotors (37) verbunden ist, um ein Drehmoment zwischen den Magnetmassen zu übertragen.

18. Drehende elektrische Maschine, umfassend einen Rotor (15) nach einem der Ansprüche 1 bis 13, der mit einem Kupplungsflansch eines mechanischen Systems verbunden ist, oder eine serielle Rotorbaugruppe (35) nach einem der Ansprüche 14 bis 16, wobei jeder Rotor mit einem Kupplungsflansch eines mechanischen Systems oder einem Rotor mit mehreren Magnetrotor (50) nach Anspruch 17 verbunden ist, der mit einem Kupplungsflansch eines mechanischen Systems verbunden ist.

## Claims

1. A non-through shaft rotor (15, 36, 37) for an electric machine, connected to a coupling flange (13b) of a mechanical system (13), the rotor comprising a cylindrical magnetic mass (16, 38, 39) sandwiched between two half shafts (17, 18, 40, 41, 42, 43) each comprising a fastening clamp (17a, 18a, 40a, 41a, 42a, 43a) connected to the magnetic mass, each half shaft is made as a single piece and comprises a coupling flange (17b, 18b, 40b, 41b, 42b, 43b) located opposite to the fastening clamp, the coupling flange (17b, 18b, 40b, 41b, 42b, 43b) of each half shaft comprising through-holes (23, 24, 44, 45) distributed over at least one diameter to accommodate fastening means so as to transmit a torque, **characterised in that** the through-holes of the flange (17b) of at least one half shaft (17) are alternately smooth (25) and tapped (26), and the coupling flange (13b) of the mechanical system (13) includes alternately smooth and threaded through-holes (28) arranged such that a smooth hole (25) of the flange (17b) of the at least one half shaft (17) is coaxial to a tapped hole (28) of the flange (13b) of the mechanical system (13) and a tapped hole (26) of the flange (17b) of the at least one half shaft (17) is coaxial to a smooth hole (27) of the flange (13b) of the mechanical system (13), screws (29) each passing through a smooth hole (27, 25) of a flange (13b, 17b) and each screw being engaged in a tapped hole (26, 28) of a flange (17b, 13b).

2. The non-through shaft rotor for an electric machine, connected to a coupling flange (13b) of a mechanical system (13), according to claim 1, wherein the fastening clamp (17a, 18a, 40a, 41a, 42a, 43a) and the coupling flange (17b, 18b, 40b, 41b, 42b, 43b) of a half shaft are connected by a middle shaft (17c, 18c, 40c, 41c, 42c, 43c).

3. The non-through shaft rotor for an electric machine, connected to a coupling flange (13b) of a mechanical system (13), according to claim 2, wherein the middle shafts (17c, 18c, 40c, 41c, 42c, 43c) have different lengths.

4. The non-through shaft rotor for an electric machine, connected to a coupling flange (13b) of a mechanical system (13), according to any of claims 1 to 3, wherein the coupling flanges (17b, 18b, 40b, 41b, 42b, 43b) of the half shafts have a different diameter (d17, d18, d40, d41, d42, d43).

5. The non-through shaft rotor for an electric machine, connected to a coupling flange (13b) of a mechanical system (13), according to any of claims 1 to 4, wherein the outer diameter (d17, d18, d40, d41, d42, d43) from the coupling flange (17b, 18b, 40b, 41b, 42b, 43b) of at least one half shaft is less than or equal to the outer diameter (d16, d38, d39) of the magnetic mass (16, 38, 39).

6. The non-through shaft rotor for an electric machine, connected to a coupling flange (13b) of a mechanical system (13), according to one of claims 1 to 2, wherein the half shafts (17, 18, 40, 41, 42, 43) are identical.

7. The non-through shaft rotor for an electric machine, connected to a coupling flange (13b) of a mechanical system (13), according to claim 1, wherein the through-holes (23, 24, 44, 45) of the flange of a half shaft are distributed in a staggered manner over at least two different diameters (D1, D2) of the flange (17b, 18b, 40b, 41b, 42b, 43b).

8. The non-through shaft rotor for an electric machine, connected to a coupling flange (13b) of a mechanical system (13), according to any of claims 1 to 7, wherein the magnetic mass (16) comprises compacted magnetic sheets (20).

9. The non-through shaft rotor for an electric machine, connected to a coupling flange (13b) of a mechanical system (13), according to any of claims 1 to 7, wherein the magnetic mass (16) comprises a stack of metal plates.

10. The non-through shaft rotor for an electric machine, connected to a coupling flange (13b) of a mechanical system (13), according to one of claims 8 and 9, further comprising tie rods (22) evenly distributed over at least one diameter of the magnetic mass (16, 38, 39) so as to hold the compacted magnetic mass between the half shafts (17, 18), the diameter (d17c) of at least one middle shaft (17c) being greater than the implantation diameter of the tie rods, the outer diameter (d17a) of the fastening clamp (17a) of said half shaft (17) being equal to the diameter (d17c) of the middle shaft, one end of each tie rod being engaged in an internal thread of the middle shaft comprising as many internal threads as tie rods.

11. The non-through shaft rotor for an electric machine, connected to a coupling flange (13b) of a mechanical system (13), according to any of claims 1 to 7, wherein the magnetic mass comprises a one-piece metal body (30).

12. The non-through shaft rotor for an electric machine, connected to a coupling flange (13b) of a mechanical system (13), according to any of claims 1 to 11, wherein the magnetic mass (16, 38, 39) comprises a central recess (34).

13. The non-through shaft rotor for an electric machine, connected to a coupling flange (13b) of a mechanical system (13), according to any of claims 1 to 12, wherein the magnetic mass (16) comprises conductive bars (21) and two short-circuit rings (19a) so as to form a squirrel cage, the short-circuit rings (19a) not being compacted between the fastening clamps (17a, 18a) and the magnetic mass (16).

14. A series rotor assembly (35) comprising at least two non-through shaft rotors (36, 37), each rotor being connected to a coupling flange of a mechanical system and defined according to any of claims 1 to 13, wherein a coupling flange (41b) of a rotor (36) is fastened to a coupling flange (42b) of the other rotor (37) to transmit a torque between the two rotors.

15. The series rotor assembly, each rotor being connected to a coupling flange of a mechanical system, according to claim 14, wherein the coupling flanges (41b, 42b) of the rotors (36, 37) are fastened to each other via an intermediate shaft (46) comprising two coupling flanges (47, 48).

16. The series rotor assembly, each rotor being connected to a coupling flange of a mechanical system, according to claim 15, wherein the intermediate shaft (46) is supported by a bearing (49).

17. A multi-magnetic mass rotor (50), comprising a rotor (37) connected to a coupling flange of a mechanical system and defined according to any of claims 1 to 13, and at least one cylindrical magnetic mass (51) a first end of which is connected to the fastening clamp (52a) of a third half shaft (52) as one-piece and the second end is connected to a coupling flange (42b) of the rotor (37) to transmit a torque between the magnetic masses.

18. A rotary electric machine comprising a rotor (15) according to any of claims 1 to 13, connected to a coupling flange of a mechanical system or a series rotor assembly (35) according to any of claims 14 to 16, each rotor being connected to a coupling flange of a mechanical system or a multi-magnetic mass rotor (50) according to claim 17, connected to a coupling flange of a mechanical system.
